Europäisches Patentamt

European Patent Office    (11) Publication number:    **0 167 252**

Office européen des brevets    **A1**

(19)

# (12) EUROPEAN PATENT APPLICATION

(21) Application number: 85303435.3    (51) Int. Cl.⁴: **F 16 K 47/08**
                                            **F 16 L 55/02**

(22) Date of filing: 16.05.85

(30) Priority: 21.05.84 US 612363

(43) Date of publication of application:
08.01.86 Bulletin 86/2

(84) Designated Contracting States:
AT BE CH DE FR GB IT LI NL SE

(71) Applicant: CONTROL COMPONENTS INC.
2567 S.E. Main Street
Irvine California 92714(US)

(72) Inventor: Nessa, Thomas F.
10 Pandora
Irvine California 92714(US)

(72) Inventor: Beaumont, Neil
12 Ticonderoga
Irvine California 92714(US)

(72) Inventor: Miller, Herbert L.
25021 Grissom Road
Laguna Hills California 92653(US)

(74) Representative: Bousfield, Roger James et al,
IMI plc Patents and Licensing Department P.O. Box 216
Witton
Birmingham B6 7BA(GB)

(54) Valves and components therefor.

(57) A control valve or resistor having a cage which includes
a helical member (96) having openings between the turns
thereof and which is arranged in the valve so that the fluid
flows through the openings, the cage also optionally includ-
ing longitudinal rods (100) and/or an apertured tube (76)
contained within the helical member and a plug (62) movable
within the cage.

EP 0 167 252 A1

Croydon Printing Company Ltd

./...

FIG.1

Valves and Components Therefor

This invention relates to valves and resistors and more particularly to valves and resistors in which fluid passing therethrough is sub-divided into a plurality of individual paths so as to impart a pressure drop in the fluid.

It is well known that there are problems associated with a large pressure drop of a fluid, especially at high flow rates, in a valve or similar device; these are due mainly to cavitation and other forms of erosion of the valve components or to extremely high noise levels which emanate from the fluid when it approaches sonic velocities and to mechanical vibration damage.

It is also well known that such problems can generally be overcome, i.e. the velocity of the fluid be controlled, by sub-dividing the fluid in the valve into a plurality of paths or passageways within which the fluid pressure is reduced, commonly by subjecting the fluid in the passageways to abrupt turns, possibly coupled with successive expansion and contraction of the fluid, and thereby causing the fluid to lose energy through the action of internal friction and friction between the fluid and the passageway walls.

The path or passageway system in known valves is often formed by causing the fluid to flow through a central restrictor (commonly known as a "cage") made either from a stack of discs, or from a series of apertured, hollow cylinders of increasing radius, and positioned concentrically with respect to each other; the passageways themselves are formed between the individual discs or cylinders. For example, grooves of desired size and shape, i.e. incorporating abrupt turns, may be machined or otherwise formed on one or both surfaces of the discs which, when the disc stack is *in situ* in the valve, causes the passageways to be formed between each disc and its adjacent discs. Alternatively, holes may be punched in some or all of the discs and the passageways formed by these holes and by relevant grooves on the disc surfaces. The cage is positioned within the valve body so that fluid is caused to flow radially from the centre of the disc stack to the outside or vice versa. The grooves have angular turns so that a valve containing the disc stack is often referred to as a "labyrinthine" or "tortuous path" valve.

Similarly, in the case of concentric cylinder cages, the apertures in adjacent cylinders are often offset so that the fluid is again caused to make angular turns as it flows through passageways formed between the apertures of adjacent cylinders.

With valves having either a disc stack or concentric cylinders, a movable plug may be positioned within the stack or the innermost cylinder which can determine the number of passageways to be utilised at any one time through use of the valve and, indeed, may be utilised to effect a complete closure of the valve.

The present invention is, however, also concerned with those valves which do not have an "on-off" function including those products commonly referred to as "resistors". For example, such resistors may simply comprise a cage per se adapted so that fluid is urged through the passageways or alternatively they may also include one or both of a resistor body and a plug movable within the resistor. The term "valves" when used herein in the specification and the claims includes all such resistors.

However, even though the valves and resistors of the above type generally operate satisfactorily, their manufacture, for example the cutting and machining of discs and cylinders of correct shape and size, and their assembly, is complex and can tend to be expensive. There is therefore a need for valves and resistors which can perform at least the same functions but which can be more readily manufactured without the complexities associated with the disc stack and concentric cylinder cages.

The invention generally satisfies this need and in addition provides a large variety of supplementary features and embodiments which can usefully be employed.

In accordance with the invention, there is provided a valve for the control of fluids having a cage which includes a helical member having openings between the turns thereof and which is arranged in the valve so that the fluid flows through the openings.

The term "helical" when used herein includes both truly helical or quasi-helical; however it is preferable for the helical member to be cylindrical in shape. Furthermore, in addition to the helical member, the cage can also usefully include one or both of:

a)    a multi-apertured tube positioned within the helical member

b)    a plurality of rods positioned adjacent the circumference of the helical member and extending in a direction substantially parallel to the longitudinal axis of the helical member.

A cage for valves of the invention can usefully comprise a set of components comprising a helical member and a plurality of longitudinal rods. Indeed, a cage may be made from more than one such set of components. Preferably the rods will be positioned within the helix; however, this is not necessarily the case and in certain valve cages the helical member is innermost and the rods are positioned outside the helix.

In preferred embodiments of the invention, the valves have a cage which comprises an apertured tube on the outer surface of which are positioned a plurality of rods extending in a direction substantially parallel to the longitudinal axis of the tube, and the helical member which is positioned around the rods, thereby sandwiching the rods between the tube and the helical member.

In such embodiments, it is expedient for passageways for the flow of fluid to be defined from within the cage via the tube apertures, via spaces between the rods and via the openings between the windings of the helical member to the outside of the cage and for means to be provided which ensure that all the fluid entering the valve passes through the passageways in a predetermined direction.

With regard to the rods, these preferably have a circular or rectangular cross section.  With regard to the helical member, this is preferably made from wire of triangular (or keystone) cross section or alternatively from circular cross-section wire or from wire having specific flow characteristics over its outer surface.  The helical component can be formed as a casting, as a helical spring-like member or, indeed in a variety of other configurations.  If appropriate, the helical member may be wound about other cage components that might be present and in particular wound about longitudinally extending rods.

A preferred basic cage assembly, i.e. one including longitudinally extending rods and a helical member can be extended if desired by adding one or more further components to the outer surface thereof so that the passageways defined within the cage as a whole become longer.  A preferred further set of cage components comprises longitudinal rods and a helical member (in combination).

The tortuous nature of the passageways within the valve cage (and hence greater fluid pressure reduction) can be improved if necessary, especially in the case of cages having further cage components added, by the addition in the cage, normally between the basic cage and the further cage (and between successive further cages if there is more than one further cage), of a particulate or porous insert. Such inserts may be made from, for example, sintered metal, metal foam and ceramic materials or may simply be particles of such materials; ball inserts, especially metal balls are preferred.

Commonly, the cage is positioned within a valve body having an inlet and an outlet thereto and means are provided linking the inlet to the cage and the cage to the outlet so that all the fluid passing from the inlet to the outlet must flow from the inside of the cage to the outside or vice versa.

The valves of the invention can usefully employ a balanced or unbalanced plug for movement within the cage so that the number of passageways available to the fluid and hence amount of fluid flow through the valve can be controlled.

Such plugs are particularly useful in valves whose cages have an apertured tube as their central component. In such cases, the plug diameter and internal diameter of the tube will be essentially identical.

In valves having a plug there can be provided a valve seat within the body so that the plug can co-operate with the seat to close the valve completely to fluid flow; hard or soft seat may be employed.

The valves of the invention may be used as, inter alia, restrictors, flow valves, back pressure valves, pressure reduction valves, balanced or unbalanced valves.

For a better understanding of the invention, reference will now be made, by way of example only, to the accompanying drawings in which:

Figure 1 shows a midline section of a valve of the invention showing a valve cage held within a partially fragmented valve body and the valve plug in a closed position.

Figure 2 shows an exploded view of the cage and peripheral components of the valve of Figure 1.

Figure 3 shows, in part, the same section as that shown in Figure 1 with the valve plug in an intermediate position within the valve screen;

Figure 4 shows, in part, two alternative cage components that can be substituted for the equivalent component shown in Figures 1 to 3;

Figure 5 shows further cages for valves of the invention;

Figure 5a shows a section along the line 5a of Figure 5;

Figure 6 shows a further alternative cage for valves of the invention;

Figure 7 shows a sectional view through two cage components with an insert therebetween;

Figure 8 shows a view of a device for manufacturing a cage for a valve of the invention;

Figure 9 shows a seat ring suitable for the cage of Figure 7 and similar cages;

Figure 10 shows a further alternative cage for a valve of the invention;

Figures 11 to 14 inclusive show further alternative cages for valves of the invention;

Figure 15 shows a performance graph of valves of the invention and prior art valves;

Figure 16 shows a cross sectional view of a further valve embodiment in accordance with the invention;

Figure 17 shows a cross sectional view of a cage for valves of the invention with an adjustable cage.

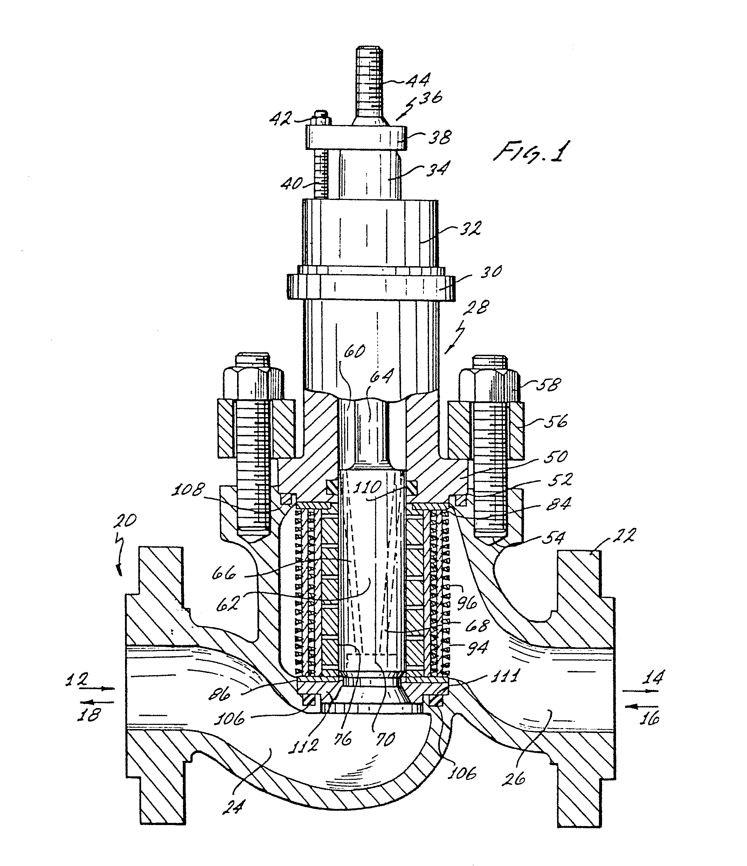

With regard to these drawings, the valve of Figure 1 has a valve body 10 through which flow can be either in the direction of arrows 12 and 14 (under the plug) or alternatively in the direction of arrows 16 and 18 (over the plug).

It is arranged in general for incompressible fluids, such as liquids or fluids containing traces of contaminants, to flow over the plug in order to prevent clogging of the valve cage, and, more importantly, prevent damage to the valve seat interface, whereas it is generally arranged for compressible fluids such as certain gases, including steam, to flow under the plug for both fluid mechanical advantages and other advantages.

The body 10 has conduits 24 and 26 which can be linked to a system, e.g. a pipe, to which the valve is to be connected by means of bolting or welding between the pipes and flanges 20,21 of the body 10.

The valve body 10 has a bonnet 28 which incorporates a large circular portion 30 with an upper portion 32 into which a packing follower 34 is seated. The packing follower 34 secures packing within the portion 30 of the upper portion 32 in order to provide a seal for a stem 36 that moves upwardly and downwardly therethrough. The packing follower 34 is held by a packing flange 38 which is secured by means of lugs 40 and nuts 42.

The stem 36 has threads 44 thereon for receiving manual or automatic lifting means (not shown) for moving the valve stem 36.

The bonnet 28 also has a flange 50 which is seated within a circumferential groove 52 in the valve body and is held in place by bolts 54 that are screwed into the valve body 10, by hold-down plate 56 and by nuts 58.

Within the bonnet 28 is a cavity 60 which can act as a balancing pressure chamber so that a plug 62, which is connected to the the lower end of the stem 64, can be balanced on either side.

The plug 62 has bores 66,68 which communicate the cavity 60 with a larger circular bore 70 in the underside of the plug. The underside 70 of the plug is subject to the pressure within the conduit 24, or the pressure drop when flow is over the plug from conduit 26, and the bores 66,68 thereby ensure that the underside 70 and the upper portion of the plug are in balance. It should be noted, however, that such balancing, although preferred, is not essential.

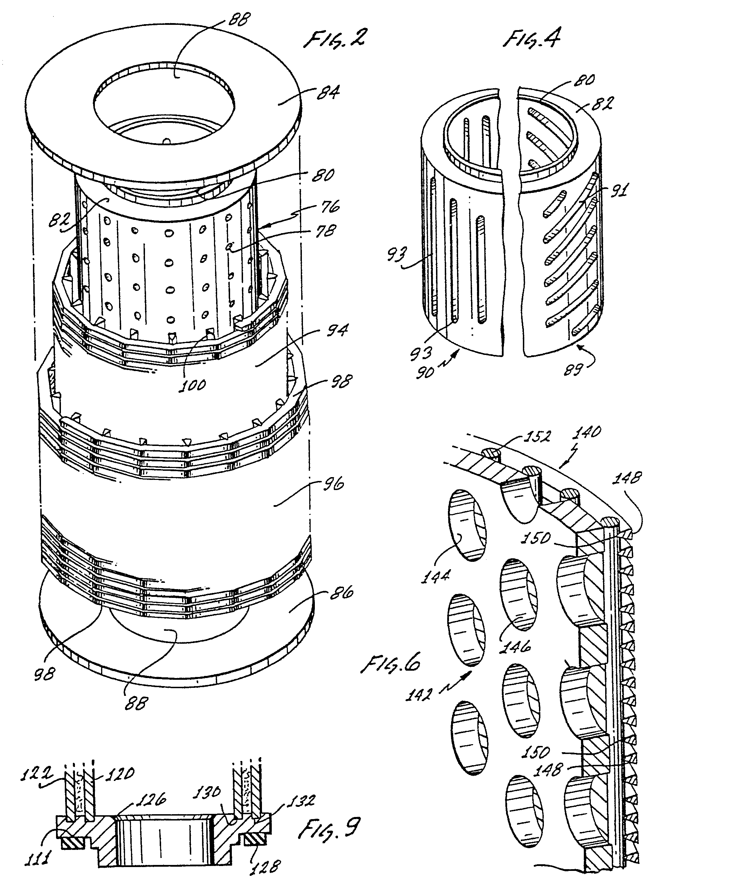

With reference to Figure 2 also, the valve has a cage which comprises a multi apertured tube 76, longitudinally extending rods 100 and a helically wound member 98. The inner tube 76 surrounds the valve plug 62 and has a plurality of holes 78 through which fluid can pass. At either end of the tube 76 is a flanged step ring 80 providing a step 82 which receives circular openings 88 of (optional) end plates 84 and 86.

The apertures 78 of tube 76 can be of any configuration commensurate with the provision of passageways through the valve cage. They may be circular apertures as shown, for example, in Figure 2 or they may be in the form of elongate slots. For example, Figure 4 shows two pipes 89,90 which may be employed as equivalents to tube 76 of Figure 1. Tube 89 has a plurality of helically oriented apertures 91, each of which will be gradually uncovered as the plug 62 moves upwards within the cage. The pitch of the helical apertures may of course be varied in any given valve. Tube 90 has elongate longitudinal slots 93 which generally follow the axis of the tube 90 and whose length can be varied in any given valve.

In addition to the helical configuration described above, a staggered configuration of apertures, such as that shown in Figure 6, or any other configuration, can be utilized to provide for incremental, linear, or exponential opening of the apertures by the plug 62 as it moves through the interior of the cage.

Surrounding the tube 76 of Figure 2 is a first set 94 of cage components comprising longitudinal rods and a helical member and a subsequent second set 96 comprising similar components.

Each set of components 94 and 96 is made by wrapping helically or circumferentially continuous or non-continuous wire 98 (the helically wound member) over a plurality of axially or longitudinally oriented rods 100. The longitudinal or axially oriented rods 100 underlie the wire 98 and are generally welded thereto in a process as will be described later. However, it is not always necessary to weld the wire 98 to the axial or longitudinal rods 100 if the wire 98 is wrapped with sufficient hoop stress to press the wires 100 into the side walls of the pipe 82 (or other suitable support); in such a case, the wire 98 can be held in situ merely by the frictional forces associated with the hoop strength engagement.

In the specific embodiment shown in Figure 2, the longitudinal or axial rods 100 are of keystone cross section, as is the cross section of the wire 98. This cross section in the helical member allows for an expanding space between adjacent turns of the helix. This can be seen more readily in the keystone wound member of Figure 6; it can also be seen to some extent in Figure 1 in which the wire 98 expands outwardly away from the tube 76 thereby providing an inwardly expanding opening towards the tube 76.

As a result the flow in one direction, namely that of arrow 16 (see Figure 1), is such that the fluid expands from one helical member, i.e. that of the set 96, to a second helical member, i.e. that of set 94. On the other hand, when flow is in the direction of arrow 12, the fluid contracts from the member of set 94 to that of set 96. Thus, flows can be characterised with either expanding and contracting relationships.

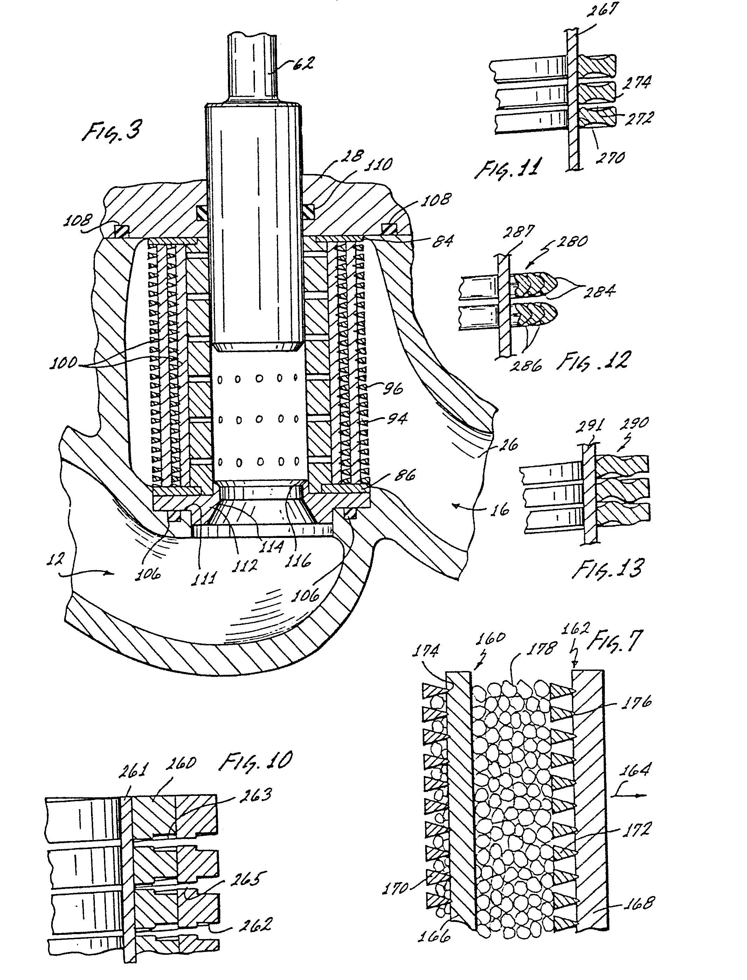

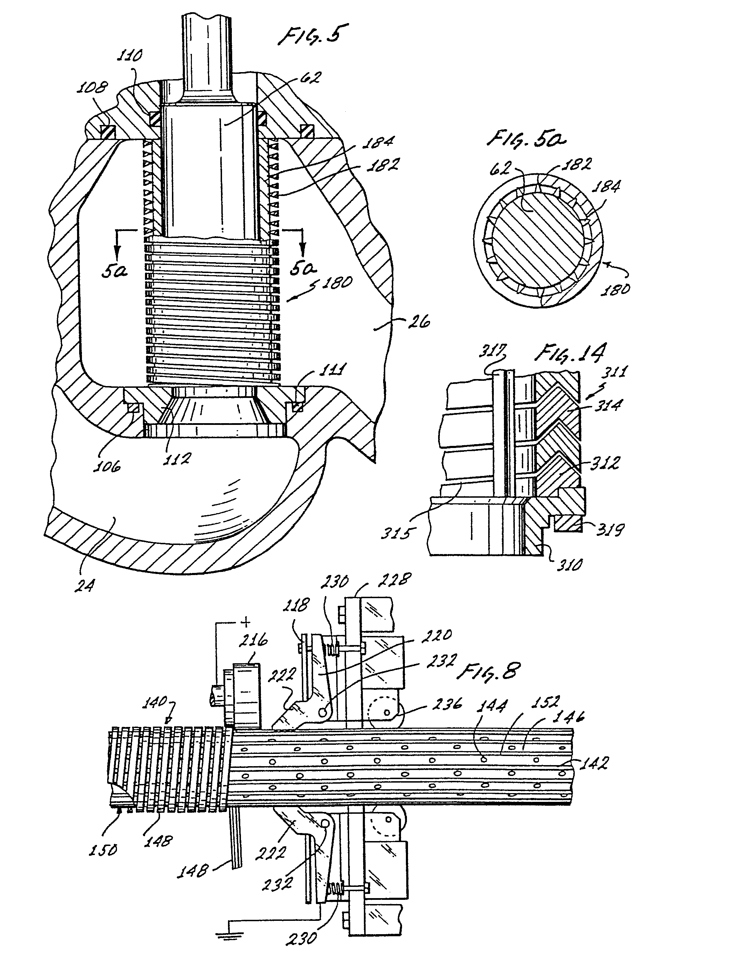

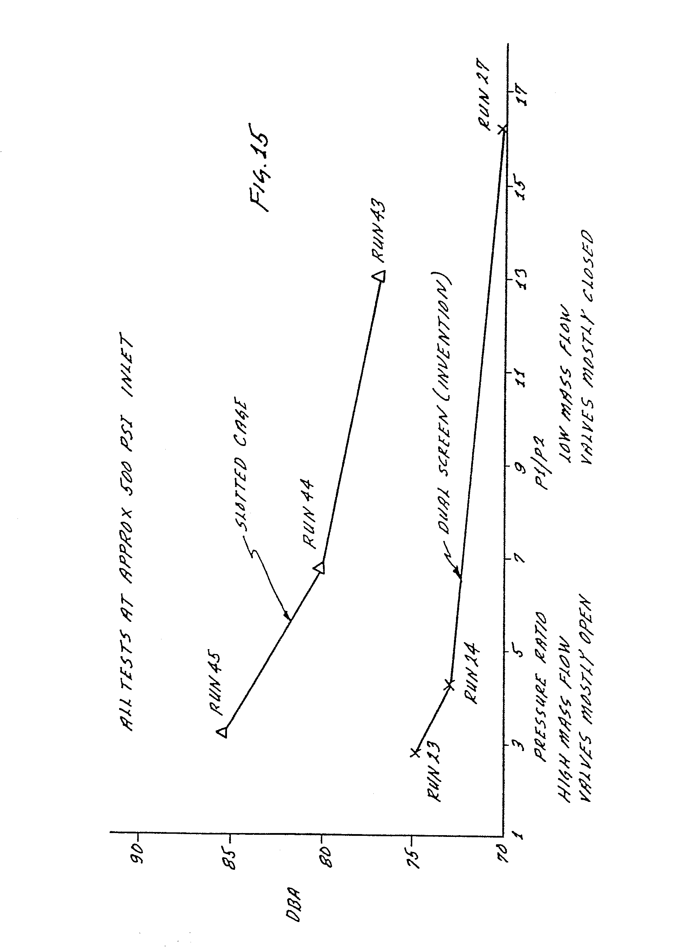

A seat ring 112, with which the plug 62 can engage, is shown in detail in Figure 3. The ring 112 has an expanding chamfered surface 114 and an interior chamfered surface 116 which can engage a chamfered surface 118 of the plug 62. Such engagement allows for a tightened seal when the plug 62 is in its (downward) closing position. Both hard and soft seals can be used herewith.

A seal 106 is utilized in order to seal the seat ring 112 to the valve body 10 to prevent leakage at the interface of ledge 111. It can be used whether or not the end plate 86 is employed with the cage sets 94 and 96. Similarly, a gasket or bonnet seal 108 is utilized at the interface between the bonnet 28 and the valve body 10.  In addition, a balance seal 110 is positioned within a circumferential groove of the bonnet 28 to seal the plug within the cavity 60.

In Figure 3, the plug 62 is shown in its partially open position exposing three circumferential levels of apertures 78.  As previously explained, these apertures can be oriented in any particular linear or exponential pattern, such as the helical and slot pattern shown in Figure 4 or a staggered pattern as shown in Figure 6.

As an alternative seal and end plate configuration to that described above, the seat ring can be provided, as shown in Figure 9, with an inner set of cage components analogous to those of sets 94 and 96.  These sets have been respectively numbered 120 and 122 in Figure 9.  The sets can be formed with the same type of windings of the wire 98 around a plurality of keystone rods 100.

The seat ring of Figure 9 is shown with a chamfered surface 126 (analogous to surface 116 of Figure 3) that receives the chamfered surface 118 of the plug.  In addition, the seat ring of Figure 9 can have a gasket or seal 128 analogous to seal 106 of Figure 3 to seal the seat ring against a rib or flange of the valve body 10, such as resting ledge 111.

The two respective cage sets 120 and 122 can be of any particular configuration, such as sets 94 and 96, or they can be formed with any other type of cross sectional wire configuration, as will be detailed below.  Whatever they comprise, they are seated within slots 130 and 132 and can be supported therein in any suitable manner including welding.

Optionally, porous metal, shavings, sintered metal, metal foam and other types of materials, including various aggregated, discrete, or porous ceramic shapes, can be placed between the cage component sets 120 and 122 as inserts. Such inserts do not need to be of substantial strength if they are properly supported by the sets 120 and 122 but they should be of sufficient strength so as not to channel or erode under high pressure drop conditions.

The cage 140 shown in Figure 6 comprises a helically wound member 148, longitudinal rods 152 and an underlying tube 142 having staggered openings 144 and 146 therein. These openings (as mentioned above) allow a plug to move over the openings and incrementally to provide an outlet through openings 144 and 146 without exposing all of the openings in a circumferential plane at one time. The helical member 140 is formed from keystone cross section wire 148 that has a triangular cross section terminating in an apex 150 positioned adjacent the round cross section rods 152. The helical member 148 is formed about the longitudinal rods 152 and the tube 142 so that all three cage components are tightly held in contact with each other. If necessary, the wire 148 can be welded to the rods 152 or held in any other suitable manner. Equally, the rods 152 can be welded to the tube 142 or held thereon in a tightened manner with substantial tension under hoop stress.

Turning to Figure 7 this shows an alternative cage having two sets 160,162 comprising longitudinal rods 166,168 and helical members 170,172 between which is an insert 178. The longitudinal rods 166,168 are in tight engagement with the helically wound members 170,172 by virtue of apexes 174,176.

The insert comprises a plurality of discrete or aggregated metal or ceramic shapes 178 (balls or other shapes) which can provide for a pressure drop across cage sets 160 and 162 to assist in providing appropriate control when the valve plug 62 is moved within the cage.  The cage shown in Figure 7 may of course include, internally of the components shown therein, an apertured tube such as component 76 of Figure 2, component 90 of Figure 4 or, indeed, any other suitable apertured tube.

With reference to Figure 5 and 5a, the valve embodiment shown therein has a cage 180 comprising a helically wound member made from keystone shaped wires 182 wrapped about longitudinally oriented rods 184. The cage does not have an apertured tube and the plug 62 moves within the cylindrical space defined by rods 184.

With regard to the manufacture of cages for valves of the invention, Figure 8 shows a cage 140 in the course of manufacture with a tube 142 having staggered openings 144 and 146, a helically wound member 148 (partially made) of keystone cross-section wire with apex 150 and longitudinal rods 152 therebetween.

A ground electrode 218 having a plurality of contact assemblies 220, each of which includes a contact 222 and a contact housing (not shown) is also illustrated in Figure 8.  The contact 222 is generally L shaped and has a leg which extends outwardly from the housing for engaging one of the rods 152.  A groove extending parallel to the rods 152 is used to guide the rods within the contact 222.  Each individual contact assembly is attached to a plate 228 along a line radially extending from the centre of the tube 142. In effect, each contact 222 engages one of the rods 152 on the outside of the tube 142.

Means are provided to urge resiliently the contact surface of each contact 222 toward the rods 152. A coil spring 230 acts to bias the rods 152 toward tube 142 and hold them in contact therewith. In the embodiment shown, the coil spring 230 is positioned between the back of the housing (not shown) and engages a leg. The spring urges the contact to pivot around a pin 232, which mounts the contact in the housing. Four wheels 236 are positioned at ninety degree angles with each other and extend between the rods 152. They engage the surface of the tube 142 and serve to hold the individual contacts of the ground electrode equally spaced from the pipe so as to place the tube centrally relative to the electrodes.

As the tube 142 and rods 152 are rotated, there is a tendency for the rods to move. However, the contacts, through the resilient force of springs 230 and the grooves in the electrodes 222, which are longitudinally oriented for feeding the rods 152 therethrough, tend to hold the rods in place.

A primary electrode 216 is positioned to engage the wire 148 as it is wrapped on the tube and provide a welding current that causes the wire and the rods 152 to be engaged and fused together. The electrode 216 is disc shaped and rolled along the wire. To complete the circuit, means are provided to connect the wires to ground a short distance ahead of the wrapped wire 148 forming the helical member. Welding can, of course, be continuous.

In addition to the above, the tube 142 and rods 152 can serve as a mandrel with the wire 148 of the helical member being wrapped tightly around with a high hoop stress but without the need for welding. This is particularly applicable if the rods 152 are of mild steel and the wire 148 is particularly resilient and can therefore provide a high tension and hoop tensile force around the rods 152 overlying the tube 142.

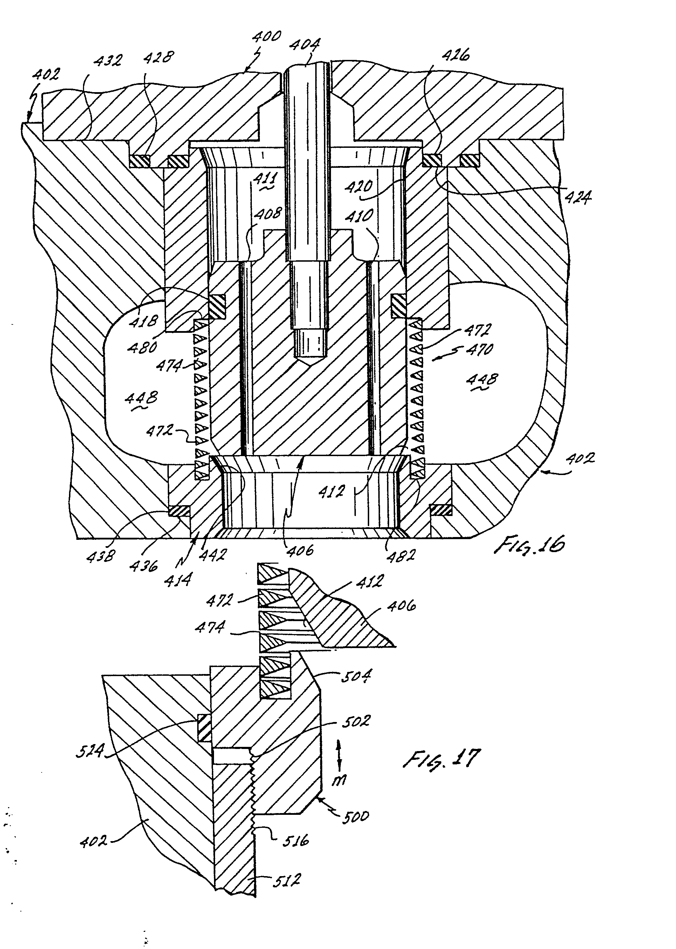

Turning to the remaining drawings, the valve cage shown (in part) in Figure 10 has two helical members 260,262 wound about longitudinal rods 261 as a substitute for cage components 94,96 shown in Figures 1, 2 and 3. In Figure 10, the T-shaped cross section of the wire of members 260,262 forms a plurality of expansion and contraction chambers, 263 and 265, respectively.

Figure 11 also shows (in part) a cage analogous to cage components 94 and 96 that have been wrapped or formed as rings on a rod 267 analogous to rods 100. In this case, the cross sectional area of the wire forming the helically wound member 274 about longitudinal rods 267 is such that contracting area 270 and expansion area 272 are formed at each turn of the helix.

Equally, Figure 12 shows a cage with a plurality of helically wound members 280 positioned about rods 287 and having contraction areas 284 and expansion areas 286 so as to provide successive expansion and contraction of the fluid. The cage embodiment shown in Figure 12 allows any one of the helical members wire stage 280 to be cast and a core to be removed (from the right hand side of the drawing) through the expansion area. However, the cross section of members 280, as well as the other wire shapes of this invention, can be cast or formed in any other suitable manner including extrusion. The members can subsequently, be welded together in staged series or formed on longitudinal rods 287 and, of course, an apertured tube can be included in the cage if desired.

A further embodiment is shown in Figure 13 in which a helically wound member 290 of "S" cross section wire is shown which allows for the possibility of expansion and contracting areas and also serve to turn the fluid flow. The member 290 has been wrapped onto a substrate in the form of longitudinal rods 291 and, of course, an apertured tube can again be included in the cage if desired.

The embodiment shown in Figure 14 comprises a base ring 310 (analogous to seat ring 112 shown in Figure 1) underlying a cage generally shown as 311. In any given cage, the spaces 315 between the turns 312,314 of the helically wound member will be such as to provide suitable flow conditions through the valve and the cross section of the wire of the helically wound member will cause a turning effect in the fluid passing between the spaces. The wires 312 and 314 are shown formed about longitudinal rods 317. To prevent fluid bypassing the base ring 310, a gasket 319 is employed between the ring and the valve body (cf Figure 1).

It will be appreciated that the helical member of cages for valves of the invention do not necessarily require any substrate such as longitudinal rods or apertured tube and the member can simply be used on its own as a cage. Indeed, in such cases in particular and when the wire of the helical member is sufficiently elastic, the helix can be expanded or compressed in situ in the valve to allow the space between adjacent turns thereof to be adjusted, thereby allowing greater or lesser flow therethrough. Thus, a degree of controlled force can be applied to the ends of the helix to allow the entire helix to expand or contract, depending upon the overall amount of opening desired between the turns.

A further valve embodiment of the invention is shown in Figures 16 and 17 and includes a bonnet 400 secured to a valve body 402 by suitable means, for example as shown in Figure 1. A stem 404 attached to a plug 406 is shown having balance bores 408 and 410 therethrough which communicate with a balance chamber 411. The plug 406 has a chamfered surface 412 which can engage a seat ring 414 and the plug is positioned within the valve body 402 by means of a spacer 420.

Sealing the plug 406 within a valve body spacer 420, sealing the spacer 420 to the valve bonnet 400, sealing the valve bonnet to the valve body 402 and sealing the seat ring 414 to the valve body are effected by means of gaskets or seals 418, 426, 428 and 438 respectively.

The seat ring 414 has a chamfered surface 442 which can engage the chamfered surface 412 of the plug. This provides for ready sealing of the flow through the passage 448 which is analogous to the inlet 26 of Figure 1 as it should be understood in this embodiment in particular that flow can take place not only under the plug but also over the plug in the manner described above.

As with other valve embodiments, the one shown in Figure 16 could alternatively be an unbalanced valve with no balance holes 408 and 410 connected to the balance chamber 411 and also the valve could have a soft seat rather than the hard seat shown.

Interposed between the spacer 420 and the seat ring 414 is a helical member 470 made from a wire 472 of keystone cross section. The wire 472 can, however, be of any other cross section. Between the turn of the helix are spaces 474 between which fluid entering the valve must pass.

The helical member 470 is held within a circumferential groove 480 of the spacer 420 and a groove 482 of the seat ring 414. The seating of the member 470 in these grooves can be effected by the normal resilience of the member, by any kind of spring engagement or it can be welded into the grooves.

In order to provide for variously sized flow openings 474 between the turns of the helical member 470, i.e. between the wires 472, the spacer 420 can be extended or diminished along its longitudinal length so as to allow for greater or lesser compression of the member 470. In addition, the spacer 420 can be substituted by means of equivalent but differently sized and/or configured spacers in order to select the desired size for spaces 474 and hence enhance the functional characteristics of the valve. The cage shown in Figure 16 comprises only the helical member 470 but it should be noted that cages also including longitudinal rods, and/or an underlying apertured tube might, in certain circumstances, also be used.

Looking more particularly at Figure 17, the seat ring 414 of Figure 16 has been substituted by a seat ring 500 having exterior threads 502 thereon. A chamfered surface 504 serves the same function as chamfered surface 442 to engage the chamfered surface 412 of the plug 406.

The threads 502 can engage equivalent threads 516 of an insert 512 held within the valve body 402. This threaded engagement allows the seat ring 500 to move relative to the valve body 402 in the directions of arrow M so that spaces 474 between the wires 472 can be varied by compression or expansion of the helical member 470. A gasket 524 seals the ring 500 against the valve body even during such movement of the ring. The insert 512 can be moved relative to the seat ring 500 by any suitable means including an internal wrench and a spanner wrench.

In general, the wire of the helical members of this invention can be formed by any suitable means such as an extrusion or casting. They can be wound as multiple interengaging pitched helixes, or a single helix. It should be noted that the wires can also be formed or wound as one continuous helix as in Figure 8, or formed as segments of a helix.

In order to show the examples of the invention when compared to other known valves, the graph of Figure 15 attached hereto shows a comparison of a prior art valve with one of the invention. The comparison is with respect to sound level measured in decibels (dBa) emitted from the valve which is eminently important and is a substantial consideration in the types of valves that form the subject matter hereof. All tests were run at approximately 34.5 bar (500 lbf/in$^2$) at the inlet (P1) and varying outlet pressures (P2). The prior art valve to be tested had a cage which simply comprised a slotted cylinder whose slots were axially oriented along the outside of the cage.

The graph shows the pressure ratio P1/P2 against emitted noise in decibels. In the first example (run 45) with the prior art (slotted cage) valve, P1 was approximately 34.5 bar (500 psi) and P2 was approximately 11.0 bar (160 psi) and the emitted noise reading was a little over 86 dBa.

In a second example (run 44), where P1 was again approximately 34.5 bar (500 psi) and P2 was approximately 5.24 bar (76 psi), the sound reading was approximately 80 dBa. However, in a third example (run 43) in which P1 was 34.5 bar (500 psi) and P2 was 2.8 bar (40 psi), the emitted noise reading was approximately 77 dBa.

Turning to valves of the invention and in particular the one shown in Figures 1 and 2 herein it can be seen from the graph that a first example (run 23) in which P1 was 34.5 bar (500 psi) and P2 was 13.8 bar (200 psi), the emitted noise reading was 75 dBa. A second example (run 24) in which P1 was 34.5 bar (500 psi) and P2 was 9.7 bar (140 psi) created an emitted noise reading of approximately 73 dBa. A third example (run 27) in which P1 was 34.5 bar (500 psi) and P2 was 2.1 bar (30 psi) established an emitted noise reading of just over 70 dBa.

These tests were conducted with a valve of the invention which included a plug. However, it should be noted that the same principles of noise reduction and improved performance apply to resistors where there is no plug and also to other valves including general pressure reduction devices and backpressure reduction devices. Accordingly, the valve of this invention should be broadly understood to apply to all elements of fluid control wherein a given amount of
fluid is to flow or be reduced and controlled.

CLAIMS:

1.      A valve for the control of fluids having a cage which includes a helical member having openings between the turns thereof and which is arranged in the valve so that the fluid flows through the openings.

2.      A valve according to Claim 1 in which the helical member is essentially cylindrical in shape.

3.      A valve according to Claim 1 or Claim 2 in which the cage also includes a multi-apertured tube positioned within the helical member.

4.      A valve according to Claim 1 or Claim 2 in which the cage also includes a plurality of rods positioned adjacent the circumference of the helical member and extending in a direction substantially parallel to the longitudinal axis of the helical member.

5.      A valve according to Claim 2 in which the cage comprises an apertured tube on the outer surface of which are positioned a plurality of rods extending in a direction substantially parallel to the longitudinal axis of the tube and the helical member which is positioned around the rods, thereby sandwiching the rods between the tube and the helical member.

6.      A valve according to Claim 5 in which passageways for the flow of fluid are defined within the cage via the tube apertures, via spaces between the rods and via the openings between the windings of the helical member to the outside of the cage and means are provided which ensure that all the fluid entering the valve passes through the passageways in a predetermined direction.

7.      A valve according to any one of Claims 4 to 6 in which the rods are of rectangular cross section.

8.     A valve according to any one of Claims 4 to 6 in which the rods are of circular cross section.

9.     A valve according to any preceeding claim in which the helical member is made from wire of triangular (or keystone) cross section.

10.     A valve according to any one of Claims 4 to 9 in which at least one further set of cage components comprising longitudinal rods and a helical member is added to a basic cage.

11.     A valve according to Claim 10 in which an insert is interposed between the basic cage and the further cage or between successive further cages.

12.     A valve according to any preceding claim in which the cage is positioned within a valve body having an inlet and an outlet thereto and means are provided linking the inlet to the cage and the cage to the outlet so that all the fluid passing from the inlet to the outlet must flow from the inside of the cage to the outside or vice versa.

13.     A valve according to any preceding claim in which a plug is provided for movement within the cage so that the number of passageways available to the fluid and hence the amount of fluid flow through the valve can be controlled.

14.     A valve according to Claim 13 in which the plug can engage with a valve seat contained within the valve body.

15.     A valve according to any preceding claim in which means are provided for the helical member to be expanded or compressed _in situ_ in the valve to allow the space between adjacent turns thereof to be adjusted.

FIG.1

FIG.2

FIG.4

88

84

80

82

76

78

94

100

98

96

86

98

88

90

80

82

91

93

93

89

FIG.6

152

140

144

148

146

150

142

150

148

122

120

126

130

132

111

128

FIG.9

0167252

3 / 6

Fig.3

Fig.11

Fig.12

Fig.13

Fig.7

Fig.10

FIG.5

FIG.5a

FIG.14

FIG.8

ALL TESTS AT APPROX 500 PSI INLET

FIG. 15

RUN 45

SLOTTED CAGE

RUN 44

RUN 43

RUN 23

DUAL SCREEN (INVENTION)

RUN 24

RUN 27

DBA

PRESSURE RATIO          P1/P2

HIGH MASS FLOW
VALVES MOSTLY OPEN

LOW MASS FLOW
VALVES MOSTLY CLOSED

5/6

0167252

Fig. 16

Fig. 17

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US-A-4 150 696 (MAX-PLANCK GESELLSCHAFT) * Column 4, line 61 - column 15, line 3; column 15, lines 9-16 * | 1-3 | F 16 K 47/08 F 16 L 55/02 |
| Y | | 3-5 | |
| Y | US-A-4 314 129 (HOUSTON WELL SCREEN CO.) * Claim 1 * | 3-5 | |
| A | EP-A-0 054 828 (NAGAOKA KANAAMI K.K.) * Abstract * | 1 | |
| A | US-A-3 722 854 (GROVE VALVE AND REGULATOR CO.) | | TECHNICAL FIELDS SEARCHED (Int. Cl.4) |
| A | US-A-1 833 518 (J.E. ERICSON) | | F 16 K 47/00 F 16 L 55/00 B 01 D 25/00 |

The present search report has been drawn up for all claims

| Place of search THE HAGUE | Date of completion of the search 02-09-1985 | Examiner DE SMET F.P. |
|---|---|---|